(19)

**Europäisches Patentamt**
**European Patent Office**
**Office européen des brevets**

(11) **EP 4 382 954 A2**

(12) **EUROPEAN PATENT APPLICATION**

(43) Date of publication:
**12.06.2024 Bulletin 2024/24**

(21) Application number: **23209458.1**

(22) Date of filing: **13.11.2023**

(51) International Patent Classification (IPC):
**G01S 7/48** *(2006.01)*　**G01S 7/497** *(2006.01)*
**G01S 17/42** *(2006.01)*　**G01S 17/86** *(2020.01)*
**G01S 17/89** *(2020.01)*　**G01S 17/931** *(2020.01)*
**G01S 7/295** *(2006.01)*

(52) Cooperative Patent Classification (CPC):
**G01S 7/4808; G01C 21/1652; G01S 7/497;**
**G01S 17/42; G01S 17/86; G01S 17/89;**
**G01S 17/931;** G01S 7/295; G01S 7/2955

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.12.2022 CN 202211569521**

(71) Applicant: **Anhui NIO Autonomous Driving**
**Technology Co., Ltd.**
**Hefei, Anhui 230601 (CN)**

(72) Inventors:
• YOU, Zhenxing
  **Heifei, Anhui (CN)**
• SUN, Li
  **Hefei, Anhui (CN)**
• YUAN, Hongyuan
  **Hefei, Anhui (CN)**
• REN, Shaoqing
  **Hefei, Anhui (CN)**

(74) Representative: **Vossius & Partner**
**Patentanwälte Rechtsanwälte mbB**
**Siebertstrasse 3**
**81675 München (DE)**

(54) **LIDAR ODOMETRY IMPLEMENTATION METHOD, COMPUTER DEVICE, STORAGE MEDIUM, AND VEHICLE**

(57)　The disclosure relates to the field of autonomous driving technologies, and specifically provides a Lidar odometry implementation method, a computer device, a storage medium, and a vehicle, which are intended to improve the real-time performance and precision of mapping and localization. For this purpose, the method provided in the disclosure includes: obtaining a motion states prediction of a vehicle in a current cycle based on measurement data of an IMU on the vehicle in a previous cycle; obtaining a first motion states observation of the vehicle in the current cycle based on a point cloud data frame of a Lidar on the vehicle in the current cycle; obtaining a second motion states observation of the vehicle in the current cycle based on measurement data of a wheel odometer on the vehicle in the current cycle; and updating the motion states prediction based on the first motion states observation and the second motion states observation, to determine an optimal motion state of the vehicle. With the above method, the optimal motion state of the vehicle can be obtained quickly and accurately, such that the real-time performance, precision and robustness of mapping and localization can be significantly improved.

```
        ┌─────────┐
        │  Start  │
        └────┬────┘
             │
  ┌──────────▼──────────────────────┐
  │ Obtain a motion states prediction│  S101
  │ of a vehicle in a current cycle  │
  │ based on measurement data of an  │
  │ IMU on the vehicle in a previous │
  │ cycle                            │
  └──────────┬──────────────────────┘
             │
  ┌──────────▼──────────────────────┐
  │ Obtain a first motion states     │  S102
  │ observation of the vehicle in the│
  │ current cycle based on a point   │
  │ cloud data frame of a Lidar on   │
  │ the vehicle in the current cycle │
  └──────────┬──────────────────────┘
             │
  ┌──────────▼──────────────────────┐
  │ Obtain a second motion states    │  S103
  │ observation of the vehicle in the│
  │ current cycle based on           │
  │ measurement data of a wheel      │
  │ odometer on the vehicle in the   │
  │ current cycle                    │
  └──────────┬──────────────────────┘
             │
  ┌──────────▼──────────────────────┐
  │ Update the motion states         │  S104
  │ prediction based on the first    │
  │ motion states observation and the│
  │ second motion states observation,│
  │ to determine an optimal motion   │
  │ state of the vehicle             │
  └──────────┬──────────────────────┘
             │
        ┌────▼────┐
        │   End   │
        └─────────┘
```

*FIG. 1*

EP 4 382 954 A2

**Description**

**Technical Field**

The disclosure relates to the field of autonomous driving technologies, and in particular to a Lidar odometry implementation method, a computer device, a storage medium, and a vehicle.

**Background Art**

A laser-radar-based mapping method mainly includes two parts: front-end and back-end. The front-end part mainly involves using a Lidar odometry for incremental local mapping, and the back-end part is mainly used for global mapping. The front-end focuses on local consistency and a real-time performance of mapping, and the back-end focuses on global consistency and a high precision of mapping. However, at present, conventional mapping methods cannot take into account the real-time performance and high precision, and a relatively high computing power is usually required to ensure a high precision, which will inevitably affect the real-time performance of mapping.

In addition, in current relative localization solutions for autonomous vehicles, a wheel speed-IMU (Inertial Measurement Unit) fused solution is mostly used. Such a solution lacks constraints on an elevation, a lateral displacement and a yaw angle, and has a very limited precision for relative localization requirements with a mileage greater than 10 meters or a time of more than 1 second. Other solutions of using a Lidar odometry also rely too much on point cloud matching of a Lidar, and do not enable multi-sensor information to be fully fused, resulting in a degraded precision and robustness in terms of some pieces of Lidar hardware with a small field of view (FOV).

Accordingly, there is a need for a new technical solution in the field to solve the above problems.

Summary

In order to overcome the above defects, the disclosure is proposed to provide a Lidar odometry implementation method, a computer device, a storage medium, and a vehicle, which are intended to solve or at least partially solve the technical problems of how to reduce a computing power requirement for mapping and localization and improve the real-time performance and robustness of mapping and localization while ensuring a high precision of mapping and localization.

In a first aspect, there is provided a Lidar odometry implementation method, the method including:

obtaining a motion states prediction of a vehicle in a current cycle based on measurement data of an IMU on the vehicle in a previous cycle;
obtaining a first motion states observation of the vehicle in the current cycle based on a point cloud data frame of a Lidar on the vehicle in the current cycle;
obtaining a second motion states observation of the vehicle in the current cycle based on measurement data of a wheel odometer on the vehicle in the current cycle; and
updating the motion states prediction based on the first motion states observation and the second motion states observation, to determine an optimal motion state of the vehicle.

In a technical solution of the above Lidar odometry implementation method, the step of "updating the motion states prediction based on the first motion states observation and the second motion states observation, to determine an optimal motion state of the vehicle" specifically includes:

updating a pose prediction in the motion states prediction based on a pose observation in the first motion states observation, and
updating a position prediction in the pose prediction based on a displacement observation in the second motion states observation, to determine the optimal motion state.

In a technical solution of the above Lidar odometry implementation method, the method further includes obtaining the displacement observation by:

obtaining a wheel speed in the current cycle based on the measurement data of the wheel odometer on the vehicle in the current cycle;
separately obtaining a vehicle posture at each moment based on measurement data of the IMU on the vehicle in the current cycle and the moment for each wheel speed in the current cycle;
separately obtaining a relative posture between each two adjacent moments based on the vehicle postures;
separately integrating wheel speeds between two adjacent moments based on the relative posture between each two adjacent moments, to obtain a relative displacement between each two adjacent moments in a world coordinate system; and
obtaining the displacement observation based on the relative displacement between each two adjacent moments.

In a technical solution of the above Lidar odometry implementation method, the step of "updating the motion states prediction based on the first motion states observation and the second motion states observation, to determine an optimal motion state of the vehicle" further includes:

updating a pose prediction in the motion states prediction based on a pose observation in the first motion states observation, and
updating a speed prediction in the motion states prediction based on a speed observation in the second motion states observation, to determine the optimal motion state.

In a technical solution of the above Lidar odometry implementation method, the method further includes performing extrinsic calibration on the IMU, the Lidar, and the wheel odometer by:

determining a traveling trajectory of the vehicle based on the optimal motion state of the vehicle;
determining whether the traveling trajectory contains a rotational trajectory with a rotational angle greater than a preset angle threshold, and whether a variation in a zero bias of the IMU within a preset duration is less than a preset variation threshold;
if the traveling trajectory contains the rotational trajectory and the variation in the zero bias of the IMU within the preset duration is less than the preset variation threshold, performing extrinsic calibration on the IMU, the Lidar, and the wheel odometer; and
if the traveling trajectory does not contain the rotational trajectory and the variation in the zero bias of the IMU within the preset duration is not less than the preset variation threshold, not performing extrinsic calibration on the IMU, the Lidar, and the wheel odometer.

In a technical solution of the above Lidar odometry implementation method, when an anomaly occurs in the wheel odometer, the method further includes:

not performing the step of "obtaining a second motion states observation of the vehicle in the current cycle based on measurement data of a wheel odometer on the vehicle in the current cycle"; and
performing the step of: updating the motion states prediction based on the first motion states observation, to determine the optimal motion state of the vehicle instead of the step of "updating the motion states prediction based on the first motion states observation and the second motion states observation, to determine an optimal motion state of the vehicle".

In a technical solution of the above Lidar odometry implementation method, when an anomaly occurs in the IMU, the method further includes:
performing the step of: using an optimal motion state of the vehicle in a previous cycle as the motion states prediction of the vehicle in the current cycle instead of the step of "obtaining a motion states prediction of a vehicle in a current cycle based on measurement data of an IMU on the vehicle in a previous cycle".

In a technical solution of the above Lidar odometry implementation method, when an anomaly occurs in the Lidar, the method further includes:

not performing the step of "obtaining a first motion states observation of the vehicle in the current cycle based on a point cloud data frame of a Lidar on the vehicle in the current cycle"; and
performing the step of: updating the motion states prediction based on the second motion states observation, to determine the optimal motion state of the vehicle instead of the step of "updating the motion states prediction based on the first motion states observation and the second motion states observation, to determine an optimal motion state of the vehicle".

In a technical solution of the above Lidar odometry implementation method, when an anomaly occurs in the IMU and the wheel odometer, the method further includes:

perform the step of: using an optimal motion state of the vehicle in a previous cycle as the motion states prediction of the vehicle in the current cycle instead of the step of "obtaining a motion states prediction of a vehicle in a current cycle based on measurement data of an IMU on the vehicle in a previous cycle";

not performing the step of "obtaining a second motion states observation of the vehicle in the current cycle based on measurement data of a wheel odometer on the vehicle in the current cycle"; and
performing the step of: updating the motion states prediction based on the first motion states observation, to determine the optimal motion state of the vehicle instead of the step of "updating the motion states prediction based on the first motion states observation and the second motion states observation, to determine an optimal motion state of the vehicle".

In a technical solution of the above Lidar odometry implementation method, the step of "obtaining a first motion states observation of the vehicle in the current cycle based on a point cloud data frame of a Lidar on the vehicle in the current cycle" specifically includes:

using a pose prediction in the motion states prediction as an initial value of a pose observation in the first motion states observation;
performing point cloud matching on the point cloud data frame and a local point cloud map based on the initial value; and
obtaining a final value of the pose observation based on a result of the point cloud matching,
where the local point cloud map is a point cloud map established based on historical point cloud data frames in a plurality of cycles before the current cycle.

In a technical solution of the above Lidar odometry implementation method, the step of "performing point cloud matching on the point cloud data frame and a local point cloud map based on the initial value" specifically includes:

performing first downsampling on the point cloud data frame to obtain candidate matching point clouds; and
performing point cloud matching on the candidate matching point clouds and the local point cloud map based on the initial value.

In a technical solution of the above Lidar odometry implementation method, before the step of "performing first downsampling on the point cloud data frame to obtain candidate matching point clouds", the method further includes: performing point cloud distortion removal on the point cloud data frame based on the pose prediction in the motion states prediction.
In a technical solution of the above Lidar odometry implementation method, the method further includes updating the local point cloud map by:

performing second downsampling on the point cloud data frame to obtain candidate map point clouds; and
superimposing the candidate map point clouds onto the local point cloud map to update the local point cloud map.

In a technical solution of the above Lidar odometry implementation method, before the step of "updating the local point cloud map", the method further includes:

determining whether the point cloud data frame in the current cycle is a point cloud data keyframe;
if the point cloud data frame in the current cycle is a point cloud data keyframe, continuing with the step of "updating the local point cloud map"; and
if the point cloud data frame in the current cycle is not a point cloud data keyframe, not performing the step of "updating the local point cloud map".

In a technical solution of the above Lidar odometry implementation method, before the step of "performing first downsampling on the point cloud data frame to obtain candidate map point clouds", the method further includes: performing point cloud distortion removal on the point cloud data frame based on the pose prediction in the motion states prediction.
In a technical solution of the above Lidar odometry implementation method, the method further includes determining a map range of the local point cloud map by:

obtaining a field-of-view range of the Lidar; and
determining the map range of the local point cloud map based on the field-of-view range.

In a technical solution of the above Lidar odometry implementation method, the method further includes: initializing a speed state of the vehicle based on the measurement data of the wheel odometer on the vehicle.
In a second aspect, a computer device is provided. The computer device includes a processor and a storage apparatus configured to store a plurality of pieces of program codes, where the program codes are adapted to be loaded and executed by the processor to perform the above Lidar odometry implementation method in any one of the technical solutions of the above Lidar odometry implementation method.

In a third aspect, a non-transitory computer-readable storage medium is provided. The computer-readable storage medium has a plurality of pieces of program codes stored therein, where the program codes are adapted to be loaded and executed by a processor to perform the above Lidar odometry implementation method in any one of the above technical solutions of the Lidar odometry implementation method.

In a fourth aspect, a vehicle is provided, the vehicle including the computer device described in the above technical solution of the computer device.

The above one or more technical solutions of the disclosure have at least one or more of the following beneficial effects:

In implementing the technical solution of the Lidar odometry implementation method of the disclosure, the motion states prediction of the vehicle in the current cycle can be predicted based on the measurement data of the IMU on the vehicle in the previous cycle; the first motion states observation of the vehicle in the current cycle can be obtained based on the point cloud data frame of the Lidar on the vehicle in the current cycle; the second motion states observation of the vehicle in the current cycle can be obtained based on the measurement data of the wheel odometer on the vehicle in the current cycle; and finally, the motion states prediction can be updated based on the first motion states observation and the second motion states observation, to determine the optimal motion state of the vehicle.

The measurement data of the IMU, the Lidar, and the wheel odometer is fused to jointly implement the Lidar odometry, such that the motion state of the vehicle within each cycle can be determined accurately. In addition, the above implementation requires a relatively low computing power, and thus does not bring about greater pressure on computing resources. Therefore, when the Lidar odometry obtained through the above implementation for mapping and localization is used, the real-time performance and high precision of mapping and localization can well be taken into account, and the defect in the prior art that a relatively high computing power is usually required to ensure a high precision, which will inevitably affect the real-time performance of mapping and localization is thus overcome.

Further, in implementing the technical solution of the Lidar odometry implementation method of the disclosure, when an anomaly occurs in one or more of the IMU, the Lidar, and the wheel odometer, the measurement data of the remaining devices may also continue to be fused to determine the optimal motion state of the vehicle, thereby significantly improving the robustness of the Lidar odometry.

## Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:

FIG. 1 is a schematic flowchart of main steps of a Lidar odometry implementation method in which an IMU, a Lidar and a wheel odometer are fused, according to an embodiment of the disclosure;

FIG. 2 is a schematic flowchart of main steps of a method for obtaining a first motion states observation according to an embodiment of the disclosure;

FIG. 3 is a schematic flowchart of main steps of a method for obtaining a second motion states observation according to an embodiment of the disclosure;

FIG. 4 is a schematic diagram of wheel speeds according to an embodiment of the disclosure;

FIG. 5 is a schematic flowchart of main steps of a method for performing extrinsic calibration on an IMU, a Lidar, and a wheel odometer according to an embodiment of the disclosure;

FIG. 6 is a schematic flowchart of main steps of a Lidar odometry implementation method in which an IMU and a Lidar are fused, according to an embodiment of the disclosure;

FIG. 7 is a schematic flowchart of main steps of a Lidar odometry implementation method in which a Lidar and a wheel odometer are fused, according to an embodiment of the disclosure;

FIG. 8 is a schematic flowchart of main steps of a Lidar odometry implementation method in which an IMU and a wheel odometer are fused, according to an embodiment of the disclosure;

FIG. 9 is a schematic flowchart of main steps of a Lidar odometry implementation method in which only a Lidar is fused, according to an embodiment of the disclosure; and

FIG. 10 is a schematic diagram of a main structure of a computer device according to an embodiment of the disclosure.

## Detailed Description of Embodiments

Some implementations of the disclosure are described below with reference to the accompanying drawings.

Those skilled in the art should understand that these implementations are only used to explain the technical principles of the disclosure, and are not intended to limit the scope of protection of the disclosure.

In the description of the disclosure, "processor" may include hardware, software or a combination of both. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory.

Embodiments of the Lidar odometry implementation method provided in the disclosure are described below.

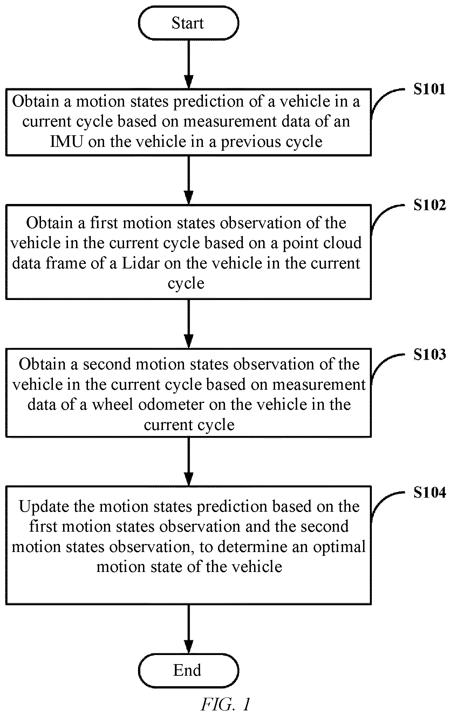

Referring to FIG. 1, FIG. 1 is a schematic flowchart of main steps of a Lidar odometry implementation method in which an IMU, a Lidar and a wheel odometer are fused, according to an embodiment of the disclosure. As shown in FIG. 1, the Lidar odometry implementation method mainly includes steps S101 to S104 below.

In step S101, a motion states prediction of a vehicle in a current cycle is predicted based on measurement data of an IMU on the vehicle in a previous cycle.

The IMU (Inertial measurement unit) includes at least a gyroscope and an accelerometer. The gyroscope can be used to obtain an angular velocity, and the accelerometer can be used to obtain an acceleration. Therefore, the measurement data of the IMU includes at least the angular velocity and the acceleration.

A posture of the vehicle can be calculated based on the angular velocity and the acceleration, and a speed and a position of the vehicle can be obtained by integrating the acceleration once and twice respectively. Therefore, the motion states prediction includes, but not limited to, the posture, the speed, and the position, and the posture and the position can be described as the pose.

It should be noted that those skilled in the art may use a conventional posture calculation method in the field of IMU technologies to calculate the posture of the vehicle based on the acceleration and the angular velocity measured by the IMU. The method described above is not specifically limited in the embodiments of the disclosure here.

In step S 102, a first motion states observation of the vehicle in the current cycle is obtained based on a point cloud data frame of a Lidar on the vehicle in the current cycle.

The first motion states observation includes at least a position and a posture of the vehicle, i.e., including at least a pose observation.

In step S 103, a second motion states observation of the vehicle in the current cycle is obtained based on measurement data of a wheel odometer on the vehicle in the current cycle.

The second motion states observation includes at least a speed of the vehicle, i.e., including at least a speed observation.

In step S104, the motion states prediction is updated based on the first motion states observation and the second motion states observation, to determine an optimal motion state of the vehicle.

In this embodiment of the disclosure, the motion states prediction can be updated using a Kalman Filtering method based on the first motion states observation and the second motion states observation, and the updated prediction can then be used as the optimal motion state.

To be specific, an IMU prediction equation shown in formula (1) can be established, a motion states prediction in a $k^{th}$ cycle can be predicted through the IMU prediction equation, and then the motion states prediction obtained through formula (1) can be updated by a state update equation shown in formula (2).

$$\begin{cases} \hat{x}_k = F_k \hat{x}_{k-1} + B_k u_k \\ P_k = F_k P_{k-1} F_k^T + Q_k \end{cases} \quad (1)$$

$$\begin{cases} \hat{x}_k' = \hat{x}_k + K(z_k - H_k \hat{x}_k) \\ P_k' = P_k - KH_k P_k \\ K = P_k H_k^T (H_k P_k H_k^T + R_k)^{-1} \end{cases} \quad (2)$$

In the above formulas (1) and (2), parameters are respectively defined as follows:

$\hat{x}_k$ represents a motion states prediction in a $k^{th}$ cycle, $\hat{x}_{k-1}$ represents a motion states prediction in a $(k-1)^{th}$ cycle, $F_k$ represents a state transition matrix in the $k^{th}$ cycle, $u_k$ represents a signal vector of a vehicle control signal in the $k^{th}$ cycle, and $B_k$ represents a control matrix in the $k^{th}$ cycle; $P_k$ represents a covariance matrix in the $k^{th}$ cycle, $P_{k-1}$ represents a covariance matrix in the $(k-1)^{th}$ cycle, $T$ represents a transpose symbol, and $Q_k$ represents noise

with a covariance of $Q_k$;

$\hat{x}'_k$ represents a result obtained after updating $\hat{x}_k$, $z_k$ represents observations (such as the first motion states observation and the second motion states observation) in the $k^{th}$ cycle, $H_k$ represents a transform matrix in the $k^{th}$ cycle, and K represents a Kalman gain; and $P'_k$ represents a result obtained after updating $P_k$.

It should be noted that the above formulas (1) and (2) are brief descriptions of the Kalman filtering method, and the steps and process of the Kalman filtering method are not repeated in the embodiments of the disclosure here.

In this embodiment of the disclosure, when each motion state is initialized, a speed state can be initialized based on the measurement data of the wheel odometer on the vehicle. In addition, a position state quantity and a posture state quantity can be respectively initialized based on a preset position priori value and a preset posture priori value.

Based on the method described in steps S101 to S104 above, the measurement data of the IMU, the Lidar, and the wheel odometer can be fused to accurately determine the motion state of the vehicle within each cycle. In addition, the above method requires a relatively low computing power, and thus does not bring about greater pressure on computing resources. Therefore, when the Lidar odometry obtained through the above method for mapping and localization is used, the real-time performance and high precision of mapping and localization can well be taken into account, and the defect in the prior art that a relatively high computing power is usually required to ensure a high precision, which will inevitably affect the real-time performance of mapping and localization is thus overcome.

Steps S 102 to S 104 above are further described below respectively.

I. Step S102 is described.

In this embodiment of the disclosure, the first motion states observation can be obtained using a point cloud matching method and based on the point cloud data frame of the Lidar.

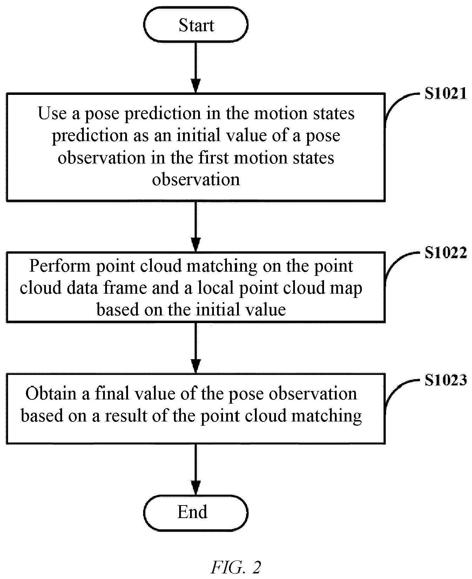

To be specific, referring to FIG. 2, in this embodiment of the disclosure, the first motion states observation can be obtained through steps S 1021 to S 1023 below.

In step S 1021, a pose prediction in the motion states prediction is used as an initial value of a pose observation in the first motion states observation.

The pose prediction refers to a position and a posture of the vehicle in the motion states prediction, and the pose observation refers to a position and a posture of the vehicle in the first motion states observation.

In step S 1022, point cloud matching is performed on the point cloud data frame and a local point cloud map based on the initial value.

The laser-radar-based mapping method mainly includes two parts: front-end and back-end. The front-end part mainly involves using a Lidar odometry for incremental local mapping, and the back-end part is mainly used for global mapping. The local point cloud map in this step is the above incremental local map, which is mainly a point cloud map established based on historical point cloud data frames in a plurality of cycles before the current cycle.

In practical applications, different Lidars may have different field-of-view ranges. For example, some Lidars have a field of view of 360° within a field-of-view range, and some other Lidars have a field of view of 120° within a field-of-view range. In order to improve the efficiency of point cloud matching, a map range of the local point cloud map can be determined based on a field-of-view range of a Lidar, and then point cloud matching is performed on a local point cloud map within this map range and point cloud data frame of the Lidar. For example, for a Lidar with a field of view of 360°, the map range may be the whole local point cloud map; and for a Lidar with a field of view of 120°, the map range may be a local point cloud map within the field-of-view range. In some preferred implementations, the map range may be slightly larger than the field-of-view range, and a point cloud map outside the field-of-view range is used as a redundant part to improve the accuracy of point cloud matching.

It should be noted that in this embodiment of the disclosure, a conventional point cloud matching method in the field of autonomous driving technologies may be used to perform point cloud matching on the point cloud data frame and the local point cloud map. For example, a point cloud matching method based on an iterative closest point (ICP) algorithm can be used to perform point cloud matching on the local map. The point cloud matching method based on the ICP algorithm may be a point cloud matching method based on a point-to-plane method in the ICP algorithm. The point cloud matching method described above is not specifically limited in the embodiments of the disclosure.

In order to improve the accuracy of point cloud matching, in this embodiment of the disclosure, when the IMU works normally, point cloud distortion removal can be performed on the point cloud data frame based on the pose prediction in the motion states prediction obtained by the IMU, and then point cloud matching is performed using the point cloud data frame after being subjected to point cloud distortion removal. It should be noted that in this embodiment of the disclosure, a conventional point cloud distortion removal method in the field of Lidar point cloud technologies may be used to perform point cloud distortion removal on the point cloud data frame. The point cloud distortion removal method described above is not specifically limited in the embodiments of the disclosure. However, in some implementations, if the IMU is anomalous and does not work normally, the point cloud distortion removal may not be performed on the point cloud data frame in the current cycle.

Further, in order to improve the efficiency of point cloud matching, in this embodiment of the disclosure, after the point cloud distortion removal of the point cloud data frame, first downsampling may also be performed on the point cloud data frame to obtain candidate matching point clouds, and then the point cloud matching is performed using the candidate matching point clouds, that is, performing point cloud matching on the candidate matching point clouds and the local point cloud map based on the initial value in step S 102 above. It should be noted that in this embodiment of the disclosure, a conventional downsampling method in the field of data sampling technologies may be used to perform first downsampling on the point cloud data frame to obtain the candidate matching point clouds. The downsampling method described above is not repeated in the embodiments of the disclosure. It can be learned from the foregoing description that when an anomaly occurs in the IMU, the point cloud distortion removal may not be performed on the point cloud data frame in the current cycle. In this case, first downsampling may be performed directly on the original point cloud data frame (which is not subjected to the point cloud distortion removal) to obtain the candidate matching point clouds.

In step S 1023, a final value of the pose observation is obtained based on a result of the point cloud matching. The initial value of the pose observation may be optimized through point cloud matching, and a result obtained after optimization is the final value of the pose observation.

Based on the method described in steps S 1021 to S 1023 above, the position and the posture (pose observation) of the vehicle can be accurately obtained using the point cloud data frame of the Lidar.

Further, in this embodiment of the disclosure, the local point cloud map may also be updated using the point cloud data frame in the current cycle, such that an accurate pose observation can be obtained using the updated local point cloud map in a next cycle. The method for updating the local point cloud map is described below.

Specifically, point cloud distortion removal is first performed on the point cloud data frame based on the pose prediction in the motion states prediction. Then, second downsampling is performed on the point cloud data frame after being subjected to point cloud distortion removal, to obtain candidate map point clouds. Finally, the candidate map point clouds are superimposed onto the local point cloud map to update the local point cloud map. In this embodiment of the disclosure, a conventional point cloud distortion removal method in the field of Lidar point cloud technologies may also be used to perform point cloud distortion removal on the point cloud data frame. The cloud distortion removal method described above is not specifically limited in the embodiments of the disclosure. It can be learned from the foregoing description that when an anomaly occurs in the IMU, the point cloud distortion removal may not be performed on the point cloud data frame in the current cycle. In this case, second downsampling may be performed directly on the original point cloud data frame (which is not subjected to the point cloud distortion removal) to obtain the candidate map point clouds.

In addition, in this embodiment of the disclosure, a conventional downsampling method in the field of data sampling technologies may also be used to perform second downsampling on the point cloud data frame to obtain the candidate map point clouds. The downsampling method described above is not repeated in the embodiments of the disclosure.

It can be learned from the above description that in this embodiment of the disclosure, the candidate matching point clouds obtained by performing the first downsampling on the point cloud data frame are not used as the candidate map point clouds; instead, two instances of downsampling are separately performed to obtain the candidate matching point clouds and the candidate map point clouds, respectively. In this way, separate control over the number of candidate matching point clouds and candidate map point clouds is facilitated, and those skilled in the art can flexibly set downsampling parameters for the first downsampling and the second downsampling according to actual needs, so as to obtain candidate matching point clouds and candidate map point clouds that meet the actual needs.

Further, in some implementations of this embodiment of the disclosure, in order to further improve the efficiency of map update, point cloud data keyframes may be selected for update, and non-point cloud data keyframes may be removed. To be specific, after the point cloud data frame in the current cycle is obtained, it is first determined whether the point cloud data frame is a point cloud data keyframe; if the point cloud data frame is a point cloud data keyframe, candidate map point clouds are obtained based on the point cloud data frame, and are then superimposed onto the local point cloud map for map update; and if the point cloud data frame is not a point cloud data keyframe, the point cloud data frame in the current cycle is not used for map update.

In this embodiment of the disclosure, it can be determined whether the point cloud data frame in the current cycle is a point cloud data keyframe in the following way.

To be specific, after start of the Lidar odometry implementation method provided in the disclosure, in order to quickly complete the initialization of the local point cloud map, point cloud data frames in a plurality of consecutive cycles after the start can all be used as point cloud data keyframes. The initialization of the local point cloud map may include:

first forming an initial local point cloud map based on candidate map point clouds on the first point cloud data keyframe, next, performing map update on the initial local point cloud map based on candidate map point clouds on the second point cloud data keyframe, and then performing map update on the updated local point cloud map based on candidate map point clouds on the third point cloud data keyframe, and so on, until map update is performed based on the last one point cloud data keyframe, such that the initialization of the local point cloud map can be completed. It should be noted that those skilled in the art can flexibly set a cycle number of the above plurality of consecutive cycles according to actual needs. For example, the cycle number may be 30 in some implementations, that is, point cloud data frames in 30 consecutive cycles after the start are all used as the point cloud data keyframes. The specific value of the cycle number is not limited in the embodiments of the disclosure.

After completion of the initialization of the local point cloud map, for a point cloud data frame in each subsequent cycle, it can be separately determined whether the point cloud data frame in each cycle is a point cloud data keyframe in the following way.

Based on the point cloud data frame in the current cycle and using the method described in steps S 101 to S 104 above, an optimal motion state of the vehicle in a current cycle is determined, and an optimal position and an optimal posture are obtained from this optimal motion state; in addition, an optimal motion state of the vehicle in a previous cycle is obtained, and an optimal position and an optimal posture are obtained from this optimal motion state.

Based on the above optimal position, a position variation in the current cycle with respect to the previous cycle is calculated; and based on the above optimal posture, a posture variation in the current cycle with respect to the previous cycle is calculated. In addition, a time interval between the current cycle and the previous cycle may be calculated. When any of the position variation, the posture variation, and the time interval is greater than their respective set values, it can be determined that the point cloud data frame in the current cycle is the point cloud data keyframe. It should be noted that those skilled in the art can flexibly set the specific values of the respective set thresholds of the above position variation, posture variation, and time interval according to actual needs. For example, in some implementations, the above position variation, posture variation, and time interval respectively correspond to a set threshold of 5 meters, 5° and 2 seconds.

In addition, it should be noted that the above map update method is illustrated by taking the point cloud data frame in the current cycle as an example, and for each of the subsequent point cloud data frames, map update is performed on the local point cloud map by using the above map update method. It can be learned from the foregoing description that the initialization of the local point cloud map is also completed using the above map update method. In other words, in this embodiment of the disclosure, whether in the initialization stage or in a stage after the initialization, the local point cloud map is established or formed based on candidate map point clouds on each point cloud data keyframe.

II. Step S 103 is described.

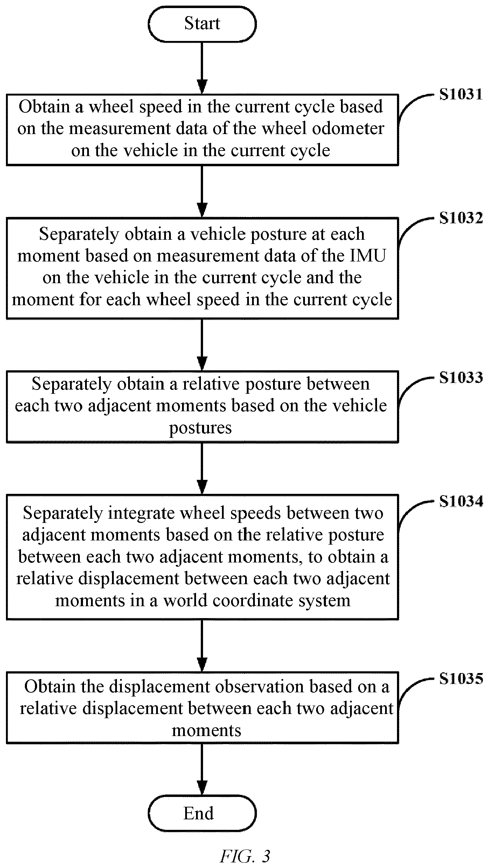

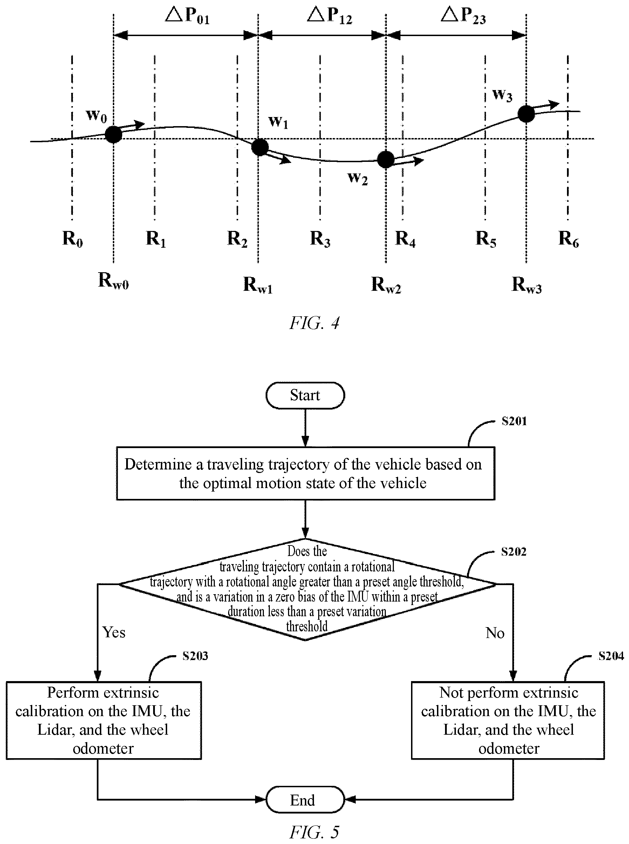

In this embodiment of the disclosure, the second motion states observation may include a displacement of the vehicle, i.e., a displacement observation, in addition to the speed of the vehicle. The method for obtaining the displacement observation will be described below in conjunction with FIGS. 3 and 4.

Referring to FIG. 3, in this embodiment of the disclosure, the displacement observation may be obtained based on the measurement data of the wheel odometer on the vehicle in the current cycle through steps S1031 to S1035 below.

In step S1031, a wheel speed in the current cycle is obtained based on the measurement data of the wheel odometer on the vehicle in the current cycle.

In step S1032, a vehicle posture at each moment is separately obtained based on measurement data of the IMU on the vehicle in the current cycle and the moment for each wheel speed in the current cycle.

Specifically, the vehicle posture at each moment in the current cycle can first be obtained based on the measurement data of the IMU, and then interpolation calculation is performed on the vehicle postures based on the moment for each wheel speed, such that a vehicle posture at each wheel speed moment can be obtained. As shown in FIG. 4, within the current cycle, there are a total of four wheel speeds in chronological order, including $w_0$, $w_1$, $w_2$, and $w_3$, and seven vehicle postures are obtained based on the measurement data of the IMU, including $R_0$, $R_1$, $R_2$, $R_3$, $R_4$, $R_5$, and $R_6$. Based on the moments for $w_0$, $w_1$, $w_2$, and $w_3$, and through interpolation calculation of the seven vehicle postures, vehicle postures $R_{w0}$, $R_{w1}$, $R_{w2}$, and $R_{w3}$ at moments for $w_0$, $w_1$, $w_2$, and $w_3$ can be obtained.

In step S1033, a relative posture between each two adjacent moments is separately obtained based on the vehicle postures. The relative posture is a variation of respective vehicle postures at two moments.

In step S1034, wheel speeds between two adjacent moments are separately integrated based on the relative posture between each two adjacent moments, to obtain a relative displacement between each two adjacent moments in a world coordinate system.

Integration of the wheel speeds based on the relative posture may allow the relative displacement between each two adjacent moments to be converted into the world coordinate system, i.e., in the same coordinate system, such that relative displacements can be directly added to obtain the displacement observation.

In some implementations, the wheel speeds at two adjacent moments may be integrated based on the above relative posture and through the following formula (3), to obtain a relative displacement between the two adjacent moments.

$$\Delta P_{i,i+1} = R_{w_{i+2}}^{ww} R_{w_{i+1}}^{w_{i+2}} \frac{w_i + w_{i+1}}{2} \Delta t_{w_i,w_{i+1}} \qquad (3)$$

In formula (3), parameters are respectively defined as follows:

$w_i$, $w_{i+1}$, and $w_{i+2}$ respectively represent the $i^{th}$ wheel speed, the $(i + 1)^{th}$ wheel speed, and the $(i + 2)^{th}$ wheel speed within the current cycle, $R_{w_{i+2}}^{ww}$ represents a conversion posture obtained by performing conversion from a vehicle coordinate system to the world coordinate system at the moment corresponding to the $(i + 2)^{th}$ wheel speed, and $R_{w_{i+1}}^{w_{i+2}}$ represents a relative posture between respective moments for the $(i + 1)^{th}$ wheel speed and the $(i + 2)^{th}$ wheel speed, $R_{w_{i+1}}^{w_{i+2}} = (R_{w_{i+2}}^{ww})^T R_{w_{i+1}}^{ww}$, where $R_{w_{i+1}}^{ww}$ represents a conversion posture obtained by performing conversion from the vehicle coordinate system to the world coordinate system at the moment corresponding to the $(i + 1)^{th}$ wheel speed, $T$ represents a transpose symbol, and $\Delta t_{w_i,w_{i+1}}$ represents a time interval between the $i^{th}$ wheel speed and the $(i + 1)^{th}$ wheel speed. It should be noted that the specific values of the above conversion postures $R_{w_{i+2}}^{ww}$ and $R_{w_{i+1}}^{ww}$ can be obtained by the IMU. The method for obtaining the above conversion postures $R_{w_{i+2}}^{ww}$ and $R_{w_{i+1}}^{ww}$ is not described in this embodiment of the disclosure, as long as the above conversion postures $R_{w_{i+2}}^{ww}$ and $R_{w_{i+1}}^{ww}$ can be obtained by the IMU.

In step S1035, the displacement observation is obtained based on a relative displacement between each two adjacent moments. Specifically, relative displacements between two adjacent moments within the current cycle can be added to obtain the displacement observation in the current cycle, that is, displacement observation $\Delta P = \Sigma \Delta P_{i,i+1}$.

Still referring to FIG. 4, the displacement observation $\Delta P$ in the current cycle can be calculated using formula (3), as shown in formula (4) below.

$$\begin{cases} \Delta P = \Delta P_{01} + \Delta P_{12} + \Delta P_{23} \\ \Delta P_{01} = R_{w_2}^{ww} R_{w_1}^{w_2} \frac{w_0 + w_1}{2} \Delta t_{w_{01}} \\ \Delta P_{12} = R_{w_3}^{ww} R_{w_2}^{w_3} \frac{w_1 + w_2}{2} \Delta t_{w_{12}} \\ \Delta P_{23} = R_{w_3}^{ww} R_{w_3}^{w_3} \frac{w_2 + w_3}{2} \Delta t_{w_{23}} \end{cases} \qquad (4)$$

During the integration of the wheel speeds, the wheel odometer is in a rotational motion, which leads to inconsistent directions of the wheel speeds at different moments within the same cycle. However, based on the method described in steps S1031 to S1035 above, integral compensation may be performed using a relative posture between two moments during the integration of the wheel speeds, to perform coordinate system unification for the wheel speeds at different moments within the same cycle, so as to eliminate the problem of inconsistent directions of the wheel speeds.

III. Step S104 is described.

It can be learned from the foregoing description of step S103 that the second motion states observation may include the displacement observation, and may also include the speed observation. In this case, when the motion states prediction is updated based on the second motion states observation, the update may be performed alternatively using the displacement observation or the speed observation. Methods for performing update by using the displacement observation or by using the speed observation are respectively described below.

(I) Method for performing update by using the displacement observation

In this embodiment of the disclosure, the pose prediction in the motion states prediction can be updated based on the pose observation in the first motion states observation, and the position prediction in the pose prediction can be updated based on the displacement observation in the second motion states observation. In other words, an observation $z_k$ in the $k^{th}$ cycle in formula (2) includes the above pose observation and displacement observation.

(II) Method for performing update by using the speed observation

In this embodiment of the disclosure, the pose prediction in the motion states prediction can be updated based on the pose observation in the first motion states observation, and the speed prediction in the pose prediction can be updated based on the speed observation in the second motion states observation. In other words, an observation $z_k$ in the $k^{th}$ cycle in formula (2) includes the above pose observation and speed prediction.

The above is the further description of steps S 102 to S 104.

In this embodiment of the disclosure, since the optimal motion state of the vehicle is determined by fusing the measurement data of multiple devices such as the IMU, the Lidar, and the wheel odometer, whether external parameters between the IMU, the Lidar, and the wheel odometer are accurate will greatly affect the accuracy of the optimal motion state. In view of this, extrinsic calibration may be performed on the external parameters between the IMU, the Lidar, and the wheel odometer through steps S201 to S204 shown in FIG. 5 in this embodiment of the disclosure, in order to prevent inaccurate external parameters from affecting the accuracy of the optimal motion state.

In step S201, a traveling trajectory of the vehicle is determined based on the optimal motion state of the vehicle. The optimal motion state includes at least a position and a posture of the vehicle.

In step S202, it is determined whether the traveling trajectory contains a rotational trajectory with a rotational angle greater than a preset angle threshold, and whether a variation in a zero bias of the IMU within a preset duration is less than a preset variation threshold; if the traveling trajectory contains the rotational trajectory and the variation in the zero bias of the IMU within the preset duration is less than the preset variation threshold, it indicates that the current motion state is estimated to be in a well-constrained steady state and is adapted to extrinsic calibration, and thus the process proceeds to step S203, otherwise, the process proceeds to step S204. It should be noted that those skilled in the art can flexibly set the specific values of a preset angle threshold and a preset duration according to actual needs, which are not specifically limited in the embodiments of the disclosure. For example, the preset angle threshold may be 45°.

In step S203, extrinsic calibration is performed on the IMU, the Lidar, and the wheel odometer.

In step S204, extrinsic calibration is not performed on the IMU, the Lidar, and the wheel odometer.

It should be noted that in this embodiment of the disclosure, a conventional extrinsic calibration method for multiple devices in the field of extrinsic calibration technologies may be used to perform joint calibration on the external parameters between the IMU, the Lidar, and the wheel odometer. The extrinsic calibration method for multiple devices described above is not specifically limited in the embodiments of the disclosure.

Based on the method described in steps S201 to S204 above, it can be determined in a timely manner whether the motion state is estimated to be in a well-constrained steady state, and extrinsic calibration is performed in the case of being in the steady state, such that the accuracy of the optimal motion state can be ensured.

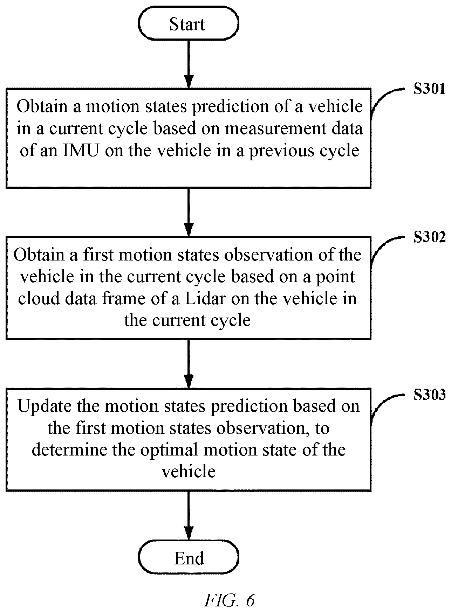

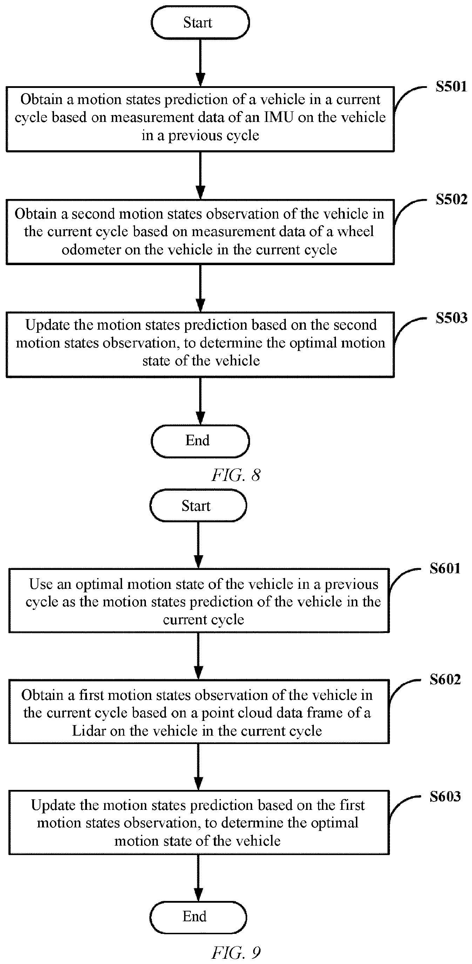

In practical applications, the IMU, the Lidar, and the wheel odometer may not work normally at the same time. In this case, the anomalous device may be removed, and the devices that are working normally continue to be fused, such that the optimal motion state of the vehicle is obtained. In the following, methods for obtaining the optimal motion state of the vehicle when an anomaly occurs respectively in the wheel odometer, the IMU, and the Lidar are described in conjunction with FIGS. 6 and 8, and a method for obtaining the optimal motion state of the vehicle when an anomaly occurs in both the wheel odometer and the IMU is also described in conjunction with FIG. 9.

I. Anomaly occurring in the wheel odometer

In this case, the measurement data of the IMU and the Lidar may continue to be fused to obtain the optimal motion state of the vehicle, that is, the Lidar odometry is running in an IMU and Lidar fused mode.

As shown in FIG. 6, when the Lidar odometry is running in the IMU and Lidar fused mode, the optimal motion state of the vehicle may be obtained through steps S301 to S303 below.

In step S301, a motion states prediction of a vehicle in a current cycle is predicted based on measurement data of an IMU on the vehicle in a previous cycle.

In step S302, a first motion states observation of the vehicle in the current cycle is obtained based on a point cloud data frame of a Lidar on the vehicle in the current cycle.

In step S303, the motion states prediction is updated based on the first motion states observation, to determine the optimal motion state of the vehicle.

Based on steps S301 to S303 above, the motion states prediction can also be updated using the Kalman Filtering method based on the first motion states observation, and the updated prediction can then be used as the optimal motion state, such that the problem of an inability to obtain the optimal motion state of the vehicle when an anomaly occurs in the wheel odometer is solved.

II. Anomaly occurring in the IMU

In this case, the measurement data of the wheel odometer and the Lidar may continue to be fused to obtain the optimal motion state of the vehicle, that is, the Lidar odometry is running in a wheel odometer and Lidar fused mode.

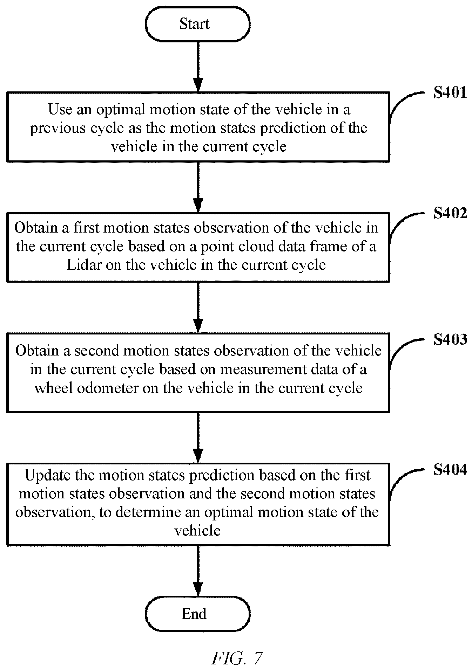

As shown in FIG. 7, when the Lidar odometry is running in the wheel odometer and Lidar fused mode, the optimal motion state of the vehicle may be obtained through steps S401 to S404 below.

In step S401, an optimal motion state of the vehicle in a previous cycle is used as the motion states prediction of the vehicle in the current cycle, that is, the motion states prediction is not obtained by the IMU.

In step S402, a first motion states observation of the vehicle in the current cycle is obtained based on a point cloud data frame of a Lidar on the vehicle in the current cycle.

In step S403, a second motion states observation of the vehicle in the current cycle is obtained based on measurement data of a wheel odometer on the vehicle in the current cycle.

In step S404, the motion states prediction is updated based on the first motion states observation and the second motion states observation, to determine an optimal motion state of the vehicle.

Based on steps S401 to S404 above, the motion states prediction can also be updated using the Kalman Filtering method based on the first motion states observation and the second motion states observation, and the updated prediction can then be used as the optimal motion state, such that the problem of an inability to obtain the optimal motion state of the vehicle when an anomaly occurs in the IMU is solved.

III. Anomaly occurring in the Lidar

In this case, the measurement data of the IMU and the wheel odometer may continue to be fused to obtain the optimal motion state of the vehicle, that is, the Lidar odometry is running in an IMU and wheel odometer fused mode.

As shown in FIG. 8, when the Lidar odometry is running in the IMU and wheel odometer fused mode, the optimal motion state of the vehicle may be obtained through steps S501 to S503 below.

In step S501, a motion states prediction of a vehicle in a current cycle is predicted based on measurement data of an IMU on the vehicle in a previous cycle.

In step S502, a second motion states observation of the vehicle in the current cycle is obtained based on measurement data of a wheel odometer on the vehicle in the current cycle.

In step S503, the motion states prediction is updated based on the second motion states observation, to determine the optimal motion state of the vehicle.

Based on steps S501 to S503 above, the motion states prediction can also be updated using the Kalman Filtering method based on the second motion states observation, and the updated prediction can then be used as the optimal motion state, such that the problem of an inability to obtain the optimal motion state of the vehicle when an anomaly occurs in the Lidar is solved.

IV Anomaly occurring in the IMU and the wheel odometer

In this case, the optimal motion state of the vehicle may continue to be obtained based on the measurement data (point cloud data frame) of the Lidar, that is, the Lidar odometry is running in a Lidar mode.

As shown in FIG. 9, when the Lidar odometry is running in the Lidar mode, the optimal motion state of the vehicle may be obtained through steps S601 to S603 below.

In step S601, an optimal motion state of the vehicle in a previous cycle is used as the motion states prediction of the vehicle in the current cycle, that is, the motion states prediction is not obtained by the IMU.

In step S602, a first motion states observation of the vehicle in the current cycle is obtained based on a point cloud data frame of a Lidar on the vehicle in the current cycle.

In step S603, the motion states prediction is updated based on the first motion states observation, to determine the optimal motion state of the vehicle.

Based on steps S601 to S603 above, the motion states prediction can also be updated using the Kalman Filtering method based on the first motion states observation, and the updated prediction can then be used as the optimal motion state, such that the problem of an inability to obtain the optimal motion state of the vehicle when an anomaly occurs in both the IMU and the wheel odometer is solved.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a computer device.

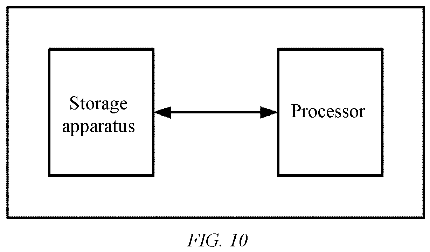

Referring to FIG. 10, FIG. 10 is a schematic diagram of a main structure of a computer device according to an embodiment of the disclosure. As shown in FIG. 10, the computer device in this embodiment of the disclosure mainly includes a storage apparatus and a processor. The storage apparatus may be configured to store a program for performing the Lidar odometry implementation method in the above method embodiments, and the processor may be configured to execute a program in the storage apparatus. The program includes, but is not limited, to the program for performing the Lidar odometry implementation method in the above method embodiments. For ease of description, only parts related to the embodiments of the disclosure are shown. For specific technical details that are not disclosed, reference may be made to the method part of the embodiments of the disclosure.

In this embodiment of the disclosure, the computer device may be a control device formed by various electronic devices. In some possible implementations, the computer device may include a plurality of storage apparatuses and a plurality of processors. In addition, the program for performing the Lidar odometry implementation method in the above method embodiments may be divided into a plurality of subprograms, each subprogram may be separately loaded and run by the processors to perform different steps of the Lidar odometry implementation method in the above method embodiments. Specifically, each subprogram may be stored separately in a different storage apparatus, and each processor may be configured to execute a program in one or more storage apparatuses to jointly implement the Lidar odometry implementation method in the above method embodiments, that is to say, each processor separately performs different steps of the Lidar odometry implementation method in the above method embodiments to jointly implement the Lidar odometry implementation method in the above method embodiments.

The plurality of processors may be processors deployed on the same device. For example, the computer device may be a high-performance device composed of a plurality of processors, and the plurality of processors may be processors configured on the high-performance device. In addition, the plurality of processors may also be processors deployed on different devices.

Further, the disclosure further provides a computer-readable storage medium.

In an embodiment of the computer-readable storage medium according to the disclosure, the computer-readable storage medium may be configured to store a program for performing the Lidar odometry implementation method in the above method embodiments, and the program may be loaded and run by a processor to implement the above Lidar odometry implementation method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in this embodiment of the disclosure is a non-transitory computer-readable storage medium.

Further, the disclosure further provides a vehicle. In an embodiment of the vehicle according to the disclosure, the vehicle may include the computer device described in the above embodiment of the computer device. In this embodiment, the vehicle may be a self-driving vehicle, an unmanned vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

Heretofore, the technical solutions of the disclosure have been described with reference to an implementation shown in the accompanying drawings. However, it would have been readily understood by those skilled in the art that the scope of protection of the disclosure is obviously not limited to these specific implementations. Those skilled in the art may make equivalent changes or substitutions to the related technical features without departing from the principle of the disclosure, and all the technical solutions with such changes or substitutions shall fall within the scope of protection of the disclosure.

**Claims**

1. A Lidar odometry implementation method, comprising:

   obtaining a motion states prediction of a vehicle in a current cycle based on measurement data of an IMU on the vehicle in a previous cycle;
   obtaining a first motion states observation of the vehicle in the current cycle based on a point cloud data frame of a Lidar on the vehicle in the current cycle;
   obtaining a second motion states observation of the vehicle in the current cycle based on measurement data of a wheel odometer on the vehicle in the current cycle;
   updating a pose prediction in the motion states prediction based on a pose observation in the first motion states observation, and
   updating a position prediction in the pose prediction based on a displacement observation in the second motion states observation, to determine the optimal motion state.

2. The Lidar odometry implementation method according to claim 1, wherein the method further comprises obtaining the displacement observation by:

   obtaining a wheel speed in the current cycle based on the measurement data of the wheel odometer on the vehicle in the current cycle;
   separately obtaining a vehicle posture at each moment based on measurement data of the IMU on the vehicle in the current cycle and the moment for each wheel speed in the current cycle;
   separately obtaining a relative posture between each two adjacent moments based on the vehicle postures;
   separately integrating wheel speeds between two adjacent moments based on the relative posture between each two adjacent moments, to obtain a relative displacement between each two adjacent moments in a world coordinate system; and
   obtaining the displacement observation based on the relative displacement between each two adjacent moments.

3. The Lidar odometry implementation method according to claim 1 or 2, wherein the step of "updating the motion states prediction based on the first motion states observation and the second motion states observation, to determine an optimal motion state of the vehicle" further comprises:

   updating a pose prediction in the motion states prediction based on a pose observation in the first motion states observation, and
   updating a speed prediction in the motion states prediction based on a speed observation in the second motion states observation, to determine the optimal motion state.

4. The Lidar odometry implementation method according to any one of claims 1 to 3, wherein the method further comprises performing extrinsic calibration on the IMU, the Lidar, and the wheel odometer by:

   determining a traveling trajectory of the vehicle based on the optimal motion state of the vehicle;
   determining whether the traveling trajectory contains a rotational trajectory with a rotational angle greater than a preset angle threshold, and whether a variation in a zero bias of the IMU within a preset duration is less than a preset variation threshold;
   if the traveling trajectory contains the rotational trajectory and the variation in the zero bias of the IMU within the preset duration is less than the preset variation threshold, performing extrinsic calibration on the IMU, the Lidar and the wheel odometer; and
   if the traveling trajectory does not contain the rotational trajectory and the variation in the zero bias of the IMU within the preset duration is not less than the preset variation threshold, not performing extrinsic calibration on the IMU, the Lidar, and the wheel odometer.

5. The Lidar odometry implementation method according to any one of claims 1 to 4, wherein when an anomaly occurs in the wheel odometer, the method further comprises:

not performing the step of "obtaining a second motion states observation of the vehicle in the current cycle based on measurement data of a wheel odometer on the vehicle in the current cycle"; and

performing the step of: updating the motion states prediction based on the first motion states observation, to determine the optimal motion state of the vehicle instead of the step of "updating the motion states prediction based on the first motion states observation and the second motion states observation, to determine an optimal motion state of the vehicle" .

6. The Lidar odometry implementation method according to any one of claims 1 to 5, wherein when an anomaly occurs in the IMU, the method further comprises:

performing the step of: using the optimal motion state of the vehicle in the previous cycle as the motion states prediction of the vehicle in the current cycle instead of the step of "obtaining a motion states prediction of a vehicle in a current cycle based on measurement data of an IMU on the vehicle in a previous cycle".

7. The Lidar odometry implementation method according to any one of claims 1 to 6, wherein when an anomaly occurs in the Lidar, the method further comprises:

not performing the step of "obtaining a first motion state observation of the vehicle in the current cycle based on a point cloud data frame of a Lidar on the vehicle in the current cycle"; and performing the step of updating the motion states prediction based on the second motion states observation, to determine the optimal motion state of the vehicle instead of the step of "updating the motion states prediction based on the first motion states observation and the second motion states observation, to determine an optimal motion state of the vehicle".

8. The Lidar odometry implementation method according to any one of claims 1 to 7, wherein when an anomaly occurs in the IMU and the wheel odometer, the method further comprises:

performing the step of: using an optimal motion state of the vehicle in a previous cycle as the motion states prediction of the vehicle in the current cycle instead of the step of "obtaining a motion states prediction of a vehicle in a current cycle based on measurement data of an IMU on the vehicle in a previous cycle";

not performing the step of "obtaining a second motion states observation of the vehicle in the current cycle based on measurement data of a wheel odometer on the vehicle in the current cycle"; and

performing the step of: updating the motion states prediction based on the first motion states observation, to determine the optimal motion state of the vehicle instead of the step of "updating the motion states prediction based on the first motion states observation and the second motion states observation, to determine an optimal motion state of the vehicle" .

9. The Lidar odometry implementation method according to any one of claims 1 to 8, wherein the step of "obtaining a first motion states observation of the vehicle in the current cycle based on a point cloud data frame of a Lidar on the vehicle in the current cycle" specifically comprises:

using a pose prediction in the motion states prediction as an initial value of a pose observation in the first motion states observation;

performing point cloud matching on the point cloud data frame and a local point cloud map based on the initial value; and

obtaining a final value of the pose observation based on a result of the point cloud matching,

wherein the local point cloud map is a point cloud map established based on historical point cloud data frames in a plurality of cycles before the current cycle.

10. The Lidar odometry implementation method according to claim 9, wherein the step of "performing point cloud matching on the point cloud data frame and a local point cloud map based on the initial value" specifically comprises:

performing point cloud distortion removal on the point cloud data frame based on the pose prediction in the motion states prediction;

performing first down-sampling on the point cloud data frame to obtain candidate matching point clouds; and

performing point cloud matching on the candidate matching point clouds and the local point cloud map based on the initial value

11. The Lidar odometry implementation method according to claim 9 or 10, wherein the method further comprises updating the local point cloud map by:

performing second down-sampling on the point cloud data frame to obtain candidate map point clouds; and
superimposing the candidate map point clouds onto the local point cloud map to update the local point cloud map.

12. The Lidar odometry implementation method according to claim 11, wherein before the step of "updating the local point cloud map", the method further comprises:

determining whether the point cloud data frame in the current cycle is a point cloud data keyframe;
if the point cloud data frame in the current cycle is a point cloud data keyframe, continuing with the step of "updating the local point cloud map"; and
if the point cloud data frame in the current cycle is not a point cloud data keyframe, not performing the step of "updating the local point cloud map".

13. The Lidar odometry implementation method according to claim 11 or 12, wherein before the step of "performing second down-sampling on the point cloud data frame to obtain candidate map point clouds", the method further comprises:
performing point cloud distortion removal on the point cloud data frame based on the pose prediction in the motion states prediction.

14. A computer device, comprising a processor and a storage apparatus configured to store a plurality of pieces of program codes, wherein the program codes are adapted to be loaded and executed by the processor to perform a Lidar odometry implementation method according to any one of claims 1 to 13.

15. A vehicle, comprising a computer device according to claim 14.

Start

Obtain a motion states prediction of a vehicle in a
current cycle based on measurement data of an
IMU on the vehicle in a previous cycle ⟋ **S101**

Obtain a first motion states observation of the
vehicle in the current cycle based on a point cloud
data frame of a Lidar on the vehicle in the current
cycle ⟋ **S102**

Obtain a second motion states observation of the
vehicle in the current cycle based on measurement
data of a wheel odometer on the vehicle in the
current cycle ⟋ **S103**

Update the motion states prediction based on the
first motion states observation and the second
motion states observation, to determine an optimal
motion state of the vehicle ⟋ **S104**

End

*FIG. 1*

Start

Use a pose prediction in the motion states
prediction as an initial value of a pose
observation in the first motion states
observation

S1021

Perform point cloud matching on the point
cloud data frame and a local point cloud map
based on the initial value

S1022

Obtain a final value of the pose observation
based on a result of the point cloud matching

S1023

End

*FIG. 2*

```
                      ┌─────────┐
                      │  Start  │
                      └─────────┘
                           │
                           ▼
   ┌───────────────────────────────────────────┐        S1031
   │  Obtain a wheel speed in the current cycle │
   │    based on the measurement data of the    │
   │     wheel odometer on the vehicle in       │
   │            the current cycle               │
   └───────────────────────────────────────────┘
                           │
                           ▼
   ┌───────────────────────────────────────────┐        S1032
   │    Separately obtain a vehicle posture     │
   │  at each moment based on measurement data  │
   │   of the IMU on the vehicle in the current │
   │    cycle and the moment for each wheel     │
   │          speed in the current cycle        │
   └───────────────────────────────────────────┘
                           │
                           ▼
   ┌───────────────────────────────────────────┐        S1033
   │   Separately obtain a relative posture     │
   │  between each two adjacent moments based   │
   │          on the vehicle postures           │
   └───────────────────────────────────────────┘
                           │
                           ▼
   ┌───────────────────────────────────────────┐        S1034
   │  Separately integrate wheel speeds between │
   │  two adjacent moments based on the relative│
   │  posture between each two adjacent moments,│
   │   to obtain a relative displacement between│
   │   each two adjacent moments in a world     │
   │            coordinate system               │
   └───────────────────────────────────────────┘
                           │
                           ▼
   ┌───────────────────────────────────────────┐        S1035
   │  Obtain the displacement observation based │
   │  on a relative displacement between each   │
   │          two adjacent moments              │
   └───────────────────────────────────────────┘
                           │
                           ▼
                      ┌─────────┐
                      │   End   │
                      └─────────┘
```

*FIG. 3*

FIG. 4

Start

Determine a traveling trajectory of the vehicle based on the optimal motion state of the vehicle

S201

Does the traveling trajectory contain a rotational trajectory with a rotational angle greater than a preset angle threshold, and is a variation in a zero bias of the IMU within a preset duration less than a preset variation threshold

S202

Yes

Perform extrinsic calibration on the IMU, the Lidar, and the wheel odometer

S203

No

Not perform extrinsic calibration on the IMU, the Lidar, and the wheel odometer

S204

End

FIG. 5

Start

Obtain a motion states prediction of a vehicle in a current cycle based on measurement data of an IMU on the vehicle in a previous cycle ⟋ S301

Obtain a first motion states observation of the vehicle in the current cycle based on a point cloud data frame of a Lidar on the vehicle in the current cycle ⟋ S302

Update the motion states prediction based on the first motion states observation, to determine the optimal motion state of the vehicle ⟋ S303

End

*FIG. 6*

Start

Use an optimal motion state of the vehicle in a previous cycle as the motion states prediction of the vehicle in the current cycle — S401

Obtain a first motion states observation of the vehicle in the current cycle based on a point cloud data frame of a Lidar on the vehicle in the current cycle — S402

Obtain a second motion states observation of the vehicle in the current cycle based on measurement data of a wheel odometer on the vehicle in the current cycle — S403

Update the motion states prediction based on the first motion states observation and the second motion states observation, to determine an optimal motion state of the vehicle — S404

End

*FIG. 7*

Start

Obtain a motion states prediction of a vehicle in a current cycle based on measurement data of an IMU on the vehicle in a previous cycle — S501

Obtain a second motion states observation of the vehicle in the current cycle based on measurement data of a wheel odometer on the vehicle in the current cycle — S502

Update the motion states prediction based on the second motion states observation, to determine the optimal motion state of the vehicle — S503

End

*FIG. 8*

Start

Use an optimal motion state of the vehicle in a previous cycle as the motion states prediction of the vehicle in the current cycle — S601

Obtain a first motion states observation of the vehicle in the current cycle based on a point cloud data frame of a Lidar on the vehicle in the current cycle — S602

Update the motion states prediction based on the first motion states observation, to determine the optimal motion state of the vehicle — S603

End

*FIG. 9*

Storage apparatus ◄──────► Processor

FIG. 10